# FASCICULE DE BREVET EUROPEEN

(11) **EP 3 287 716 B1**
(45) Date de publication et mention de la délivrance du brevet: **03.08.2022**
(21) Numéro de dépôt: 17177465.6
(22) Date de dépôt: 22.06.2017
(51) Int. Cl.: F25B 21/00

(54) **APPAREIL THERMIQUE MAGNETOCALORIQUE**
MAGNETOKALORISCHES THERMOGERÄT
MAGNETOCALORIC THERMAL APPARATUS

(30) Priorité: 30.06.2016 FR 1656183
(43) Date de publication de la demande: 28.02.2018
(73) Titulaire: UBIBLUE, 67000 Strasbourg (FR)
(72) Inventeur: HITTINGER, Michaël, 67400 Illkirch (FR); MULLER, Christian, 67000 STRASBOURG (FR)
(74) Mandataire: Cabinet Laurent & Charras

(56) Documents cités:
- FR-A1- 2 994 018
- FR-A1- 3 028 927
- US-A1- 2008 223 853

## Description

### Domaine technique :

La présente invention concerne un appareil thermique magnétocalorique comportant un arrangement magnétique définissant au moins un entrefer, appelé « entrefer de génération thermique », dans lequel circule un champ magnétique, au moins un support placé dans le plan médian dudit au moins un entrefer de génération thermique et portant des éléments magnétocaloriques répartis dans des zones actives séparées par des zones passives dépourvues d'éléments magnétocaloriques, les zones actives ayant une perméabilité magnétique supérieure aux zones passives, un dispositif d'entraînement agencé pour déplacer ledit arrangement magnétique ou ledit au moins un support relativement l'un par rapport à l'autre afin de faire entrer et sortir lesdits éléments magnétocaloriques dudit au moins un entrefer de génération thermique pour qu'ils subissent des cycles magnétiques successifs, lesdits cycles magnétiques générant au sein dudit dispositif d'entraînement une force d'entrainement oscillante due à une alternance de perméabilités magnétiques différentes entre les zones actives et les zones passives dudit support, appareil comportant en outre un dispositif de compensation magnétique agencé pour créer une force de compensation magnétique oscillante déphasée par rapport à la force d'entraînement oscillante dudit dispositif d'entraînement pour générer une force résultante oscillante dont l'amplitude est inférieure à l'amplitude de la force d'entrainement oscillante.

### Technique antérieure :

La présente invention concerne le domaine du froid magnétique, et plus particulièrement celui des appareils thermiques utilisant l'effet magnétocalorique de matériaux dits magnétocaloriques.

L'effet magnétocalorique (EMC) des matériaux magnétocaloriques consiste en une variation de leur température lorsqu'ils sont soumis à un champ magnétique variable en intensité. Il suffit ainsi de soumettre ces matériaux à une succession de cycles magnétiques comportant une alternance de phases de magnétisation et de démagnétisation et de réaliser un échange thermique avec un fluide caloporteur traversant lesdits matériaux de part en part pour parvenir à une variation de température la plus élargie possible entre les extrémités desdits matériaux. L'aimantation et la désaimantation des matériaux magnétocaloriques se fait par un déplacement relatif d'un arrangement magnétique par rapport auxdits matériaux magnétocaloriques suivant un mouvement qui peut être quelconque mais qui est généralement linéaire ou rotatif. Ce cycle magnétique est répété jusqu'à des fréquences de plusieurs Hertz. L'efficacité d'un tel cycle de réfrigération magnétique surpasse d'environ 50 % celle d'un cycle de réfrigération classique.

Le matériau magnétocalorique s'échauffe de manière quasi-instantanée quand il est placé dans un champ magnétique et se refroidit suivant une même dynamique thermique quand il est retiré du champ magnétique. Pendant ces phases magnétiques, le fluide caloporteur va, soit se réchauffer au contact du matériau magnétocalorique lors d'une phase dite de magnétisation, soit se refroidir au contact du matériau magnétocalorique lors d'une phase dite de démagnétisation. De manière générale, dans les applications fonctionnant à température ambiante, le fluide caloporteur est un liquide et circule dans des canaux rectilignes ou des pores débouchants existants dans le matériau magnétocalorique. A cet effet, le liquide caloporteur peut être de l'eau pure ou additionnée d'antigel, un produit glycolé ou une saumure, par exemple.

Plus le champ magnétique est élevé dans l'entrefer, plus l'effet magnétocalorique induit dans le matériau magnétocalorique est important, ce qui a pour effet d'augmenter la puissance thermique aussi bien que son gradient de température entre ses deux extrémités d'entrée/sortie du fluide caloporteur, et donc le rendement global d'un tel appareil thermique magnétocalorique. De la même manière, quand la fréquence des cycles augmente, la puissance thermique (par exemple : le refroidissement) délivrée par l'appareil thermique augmente également. Pour que cette puissance augmente en proportion de l'augmentation de la fréquence, il est nécessaire d'avoir un arrangement magnétique susceptible de pouvoir générer un champ magnétique uniforme et intense dans au moins un entrefer et de pouvoir réaliser le déplacement relatif de cet arrangement magnétique par rapport aux éléments magnétocaloriques en consommant le moins d'énergie possible.

A cet effet, les appareils thermiques magnétocaloriques à structure rotative sont privilégiés car la configuration rotative permet de réaliser un appareil thermique compact, d'autoriser un déplacement relatif continu de l'arrangement magnétique par rapport aux éléments magnétocaloriques ou inversement, et de présenter un bon ratio d'éléments magnétocaloriques par volume utilisé. Etant donné que la puissance thermique de l'appareil thermique dépend notamment de la quantité de matériaux magnétocaloriques utilisée, une telle disposition est effectivement très avantageuse. La demanderesse a déposé à cet effet les demandes de brevets FR 2 987 433 et FR 2 994 018 ayant pour objet des arrangements magnétiques rotatifs. Néanmoins, les appareils thermiques magnétocaloriques à structure linéaire imposant un déplacement relatif alternatif de l'arrangement magnétique par rapport aux éléments magnétocaloriques ou inversement restent des solutions qui peuvent être intéressantes dans certaines applications et ne sont pas exclus du champ d'application de l'invention.

Le déplacement du fluide caloporteur devant être synchronisé avec le cycle magnétique, les matériaux magnétocaloriques sont regroupés sous la forme de zones actives, discrètes, appelées communément des « lits » ou des « éléments » magnétocaloriques, dans chacune desquelles les matériaux magnétocaloriques sont dans un état magnétique sensiblement équivalent permettant le déplacement du fluide caloporteur à leur contact de manière synchrone avec leur état magnétique. Pour des raisons pratiques et/ou géométriques, les matériaux magnétocaloriques sont donc mis en forme ou configurés en zones actives, discrètes, non contigües, séparées par des zones passives, ne contenant pas de matériaux magnétocaloriques, typiquement des parois de logement, des éléments de structure, de l'air ou similaire.

Par ailleurs, étant donné que la perméabilité magnétique de l'air ou celle des zones passives ne comportant pas de matériaux magnétocaloriques est inférieure à celle des zones actives comportant des matériaux magnétocaloriques, le déplacement relatif des éléments magnétocaloriques par rapport à l'arrangement magnétique ou inversement entraîne dans l'entrefer une alternance de différentes perméabilités magnétiques, avec une attraction ou une force magnétique plus importante au passage des éléments magnétocaloriques et inversement une attraction ou une force magnétique plus faible au passage des zones séparant deux éléments magnétocaloriques consécutifs. Cette variation d'attractions ou d'efforts magnétiques perturbe le déplacement ou la vitesse angulaire de l'arrangement magnétique ou des éléments magnétocaloriques. De fait, ce déplacement ou cette vitesse angulaire n'est pas naturellement continu, ni uniforme et subit des à-coups. Cette situation est néfaste car elle perturbe le cycle magnétique en réduisant la puissance thermique et en augmentant la consommation d'énergie. Elle entraîne également une augmentation du niveau sonore de fonctionnement de l'appareil due aux vibrations engendrées et a une incidence négative sur son endurance et sur sa stabilité mécanique. Elle impose en outre un surdimensionnement du système de motorisation de l'arrangement magnétique ou des éléments magnétocaloriques pour accepter les pics d'efforts ou les variations de couples.

La construction des appareils thermiques magnétocaloriques actuels propose de limiter l'impact de ce phénomène en compensant la sortie du champ magnétique d'un des éléments magnétocaloriques par l'entrée dans le champ magnétique simultanée d'un autre élément magnétocalorique. Cette compensation du couple moteur ou de l'effort moteur n'est néanmoins pas parfaite pour de multiples raisons. La perméabilité magnétique des éléments magnétocaloriques dépend de la température instantanée desdits éléments et de leur température de Curie, et peut de ce fait ne pas être égale entre un élément magnétocalorique sortant du champ et un autre élément magnétocalorique entrant dans le champ. Le profil de transition du champ magnétique de l'entrefer aux éléments magnétocaloriques n'est pas parfait et comporte des dispersions ou distorsions, contribuant à un résultat aléatoire. La configuration de l'appareil thermique magnétocalorique impose des contraintes géométriques ou techniques quant à la disposition spatiale des éléments magnétocaloriques entre eux, qui peut empêcher la disposition préconisée ci-dessus. Cette solution n'est donc pas satisfaisante.

La publication FR 3 028 927 A1 de la demanderesse propose une solution de compensation magnétique plus facile à mettre en œuvre, obtenue également par construction, dans un appareil thermique comportant au moins deux étages thermiques, en décalant angulairement les structures magnétisantes ou le support d'éléments magnétocaloriques d'un premier étage thermique par rapport à ceux d'un deuxième étage thermique. Cette solution impose de disposer d'au moins deux étages thermiques. De plus, elle n'est pas totalement satisfaisante puisqu'elle ne permet qu'une compensation magnétique partielle des oscillations du couple moteur ou de l'effort moteur. Le fait de décaler angulairement un étage thermique par rapport à l'autre a pour effet de décaler les deux oscillations de couple sans jamais pouvoir les mettre en opposition de phase, car les deux étages thermiques sont reliés hydrauliquement entre eux. Le décalage angulaire introduit par conséquent une désynchronisation magnéto-fluidique qui doit rester limitée. On obtient schématiquement deux fois plus de pics mais avec une amplitude divisée par deux plus facile à gérer par l'asservissement du dispositif d'entraînement.

### Exposé de l'invention :

La présente invention vise à résoudre ces inconvénients en proposant un appareil thermique magnétocalorique agencé pour compenser plus efficacement, voire totalement les variations de perméabilité magnétique induites par l'agencement des éléments magnétocaloriques, permettant de limiter voire de supprimer les à-coups, dans le but d'obtenir un déplacement relatif de l'arrangement magnétique par rapport aux éléments magnétocaloriques le plus constant possible, permettant ainsi de préserver la puissance thermique de l'appareil, limiter la consommation d'énergie, réduire le niveau sonore de fonctionnement de l'appareil, préserver son endurance et sa stabilité mécanique, sans avoir besoin de surdimensionner le dispositif d'entrainement.

Dans ce but, l'invention concerne un appareil thermique magnétocalorique tel que défini par la revendication 1.

Grâce à cette construction particulière, le dispositif de compensation magnétique peut être conçu et défini spécifiquement pour remplir sa fonction de compensation magnétique afin qu'elle soit la plus adaptée possible et donc la plus performante. Il est ainsi possible de créer une force de compensation magnétique oscillante qui est réellement en opposition de phase par rapport à la force d'entraînement oscillante du dispositif d'entraînement, et ceci sans introduire une quelconque désynchronisation magnéto-fluidique dans ledit appareil. Un autre avantage réside dans le fait que l'appareil thermique magnétocalorique peut ne comporter qu'un seul étage thermique, à l'inverse de la solution décrite dans la publication FR 3 028 927 A1, étant donné que ce dispositif de compensation magnétique est indépendant des éléments magnétocaloriques.

Dans une forme de réalisation préférée de l'invention, l'appareil thermique magnétocalorique a une structure rotative autour d'un axe longitudinal, ledit au moins un support présente une forme circulaire centrée sur ledit axe longitudinal, lesdits éléments magnétocaloriques sont répartis sur ledit au moins un support dans lesdites zones actives séparées entre-elles d'un pas angulaire constant, et ledit dispositif d'entraînement est agencé pour déplacer ledit arrangement magnétique ou ledit au moins un support en rotation relative de l'un par rapport à l'autre autour dudit axe longitudinal. Dans ce cas, le dispositif de compensation magnétique peut être disposé à l'extérieur de l'entrefer de génération thermique, et ladite première pièce magnétique comporte au moins un aimant disposé radialement à distance dudit axe longitudinal, et ladite seconde pièce magnétique ou ferromagnétique comporte une couronne, centrée sur l'axe longitudinal, présentant en regard dudit au moins un aimant une alternance de zones de perméabilités magnétiques élevées et faibles dans ledit entrefer de compensation.

Ledit au moins un aimant peut être monté sur une partie fixe dudit appareil et ladite couronne peut être couplée en rotation avec ledit dispositif d'entraînement. Inversement, ledit au moins un aimant peut être couplé en rotation avec ledit dispositif d'entraînement et ladite couronne peut être montée sur une partie fixe dudit appareil.

Selon la variante de réalisation de l'invention, ledit au moins un aimant et ladite couronne sont alignés radialement, et ledit entrefer de compensation s'étend radialement, ou ledit au moins un aimant et ladite couronne sont alignés axialement, et ledit entrefer de compensation s'étend axialement.

La couronne peut être crénelée et comporter une alternance de dents et de creux, lesdites dents étant séparées d'un pas angulaire sensiblement égal au pas angulaire séparant les zones actives dudit support.

Cette couronne peut être réalisée en matériau ferromagnétique, ou comporter un support de couronne en matériau amagnétique et des éléments ferromagnétiques disposés en couronne sur ledit support de couronne, formant des dents séparées d'un pas angulaire sensiblement égal au pas angulaire séparant les zones actives dudit support.

Cette couronne peut également comporter des aimants formant les dents alternées avec des creux, lesdits aimants étant montés sur un support de couronne en matériau amagnétique, et orientés pour que les faces des aimants en regard dans ledit entrefer de compensation soient de polarités opposées. Elle peut encore comporter une succession d'aimants de polarités inversées et disposés de manière alternée pour que les faces des aimants en regard dans ledit entrefer de compensation soient alternativement de polarités opposées et de même polarité.

En option, le dispositif de compensation magnétique peut comporter en outre des moyens de réglage de l'écart dudit entrefer de compensation pour ajuster la force de compensation magnétique oscillante à la force d'entraînement oscillante dudit dispositif d'entraînement. Dans ce cas, ledit au moins un aimant peut être monté sur un chariot, et lesdits moyens de réglage peuvent comporter un actionneur couplé audit chariot et piloté par un capteur d'effort associé audit dispositif d'entraînement.

Dans la forme préférée de l'appareil thermique magnétocalorique selon l'invention, ayant une structure rotative autour d'un axe longitudinal, ledit dispositif de compensation magnétique peut également être disposé à l'intérieur de l'entrefer de génération thermique, ladite première pièce magnétique étant confondue avec lesdits au moins deux aimants permanents dudit arrangement magnétique, et ladite seconde pièce comportant des éléments ferromagnétiques ajoutés sur ledit support, dans les zones passives dépourvues d'éléments magnétocaloriques, pour créer ladite force de compensation magnétique oscillante.

Dans ce cas, ledit arrangement magnétique peut être monté sur une partie fixe dudit appareil et ledit support peut être couplé en rotation avec ledit dispositif d'entraînement, ou inversement, ledit arrangement magnétique peut être couplé en rotation avec ledit dispositif d'entraînement et ledit support peut être monté sur une partie fixe dudit appareil.

### Description sommaire des dessins :

La présente invention et ses avantages apparaîtront mieux dans la description suivante de plusieurs modes de réalisation donnés à titre d'exemples non limitatifs, en référence aux dessins annexés, dans lesquels:
- la figure 1 est une vue en coupe axiale et en perspective d'une partie d'un appareil thermique magnétocalorique selon une première forme de réalisation de l'invention,
- la figure 2 est une vue en coupe axiale en plan de l'appareil de la figure 1,
- la figure 3 est une vue en bout en transparence de la figure 1,
- la figure 4 est une vue similaire à la figure 1 d'un appareil thermique magnétocalorique selon une deuxième forme de réalisation de l'invention,
- la figure 5 est une vue similaire à la figure 1 d'un appareil thermique magnétocalorique selon une troisième forme de réalisation de l'invention,
- la figure 6 est une vue similaire à la figure 1 d'un appareil thermique magnétocalorique selon une quatrième forme de réalisation de l'invention,
- la figure 7 est une vue similaire à la figure 1 d'un appareil thermique magnétocalorique selon une cinquième forme de réalisation de l'invention,
- la figure 8 est une vue en bout de la figure 7,
- la figure 9 est un diagramme illustrant l'intérêt du couple de compensation magnétique, et
- les figures 10 à 13 sont des représentations schématiques linéaires de différentes formes de réalisation du dispositif de compensation magnétique selon l'invention.

### Illustrations de l'invention et différentes manières de la réaliser :

En référence aux figures, la présente invention concerne un appareil thermique magnétocalorique 1, appelé par la suite «appareil 1 », de structure rotative autour d'un axe longitudinal A qui comporte de manière connue :
- un arrangement magnétique 2 définissant au moins un entrefer et, dans les exemples représentés, deux entrefers diamétralement opposés, appelés « entrefer de génération thermique E₁, E₂ », dans lesquels circule un champ magnétique,
- au moins un support 3 placé sensiblement dans le plan médian P desdits entrefers de génération thermique E₁, E₂, ce support portant des éléments magnétocaloriques 4 répartis dans des zones actives ZA séparées par des zones passives ZP dépourvues d'éléments magnétocaloriques,
- un dispositif d'entraînement 10 agencé pour déplacer ledit arrangement magnétique 2 ou ledit au moins un support 3 selon un mouvement rotatif relatif de l'un par rapport à l'autre de sorte que les éléments magnétocaloriques 4 puissent entrer et sortir alternativement des entrefers de génération thermique E₁, E₂ et subissent ainsi des cycles magnétiques successifs créés par la présence d'un champ magnétique lorsqu'ils sont à l'intérieur desdits entrefer de génération thermique E₁, E₂, et par l'absence d'un champ magnétique lorsqu'ils sont à l'extérieur desdits entrefers de génération thermique E₁, E₂, et
- un dispositif de mise en circulation (non représenté) d'au moins un fluide caloporteur au travers desdits éléments magnétocaloriques 4, et d'échangeurs de chaleur (non représentés) pour réaliser un échange thermique avec un environnement ou une application extérieure. Par application extérieure, on entend toute application aussi bien industrielle que domestique pour laquelle il est nécessaire de refroidir, climatiser, tempérer, chauffer, etc. un fluide gazeux ou liquide.

Bien entendu, cet exemple n'est pas limitatif et s'étend à un appareil thermique magnétocalorique ayant une structure linéaire dans laquelle l'arrangement magnétique ou ledit au moins un support est déplacé selon un mouvement linéaire relatif de l'un par rapport à l'autre, ce mouvement étant nécessairement alternatif. Néanmoins, le mode de réalisation illustré a l'avantage de permettre un entraînement rotatif continu et une optimisation de la densité d'éléments magnétocaloriques dans un volume réduit.

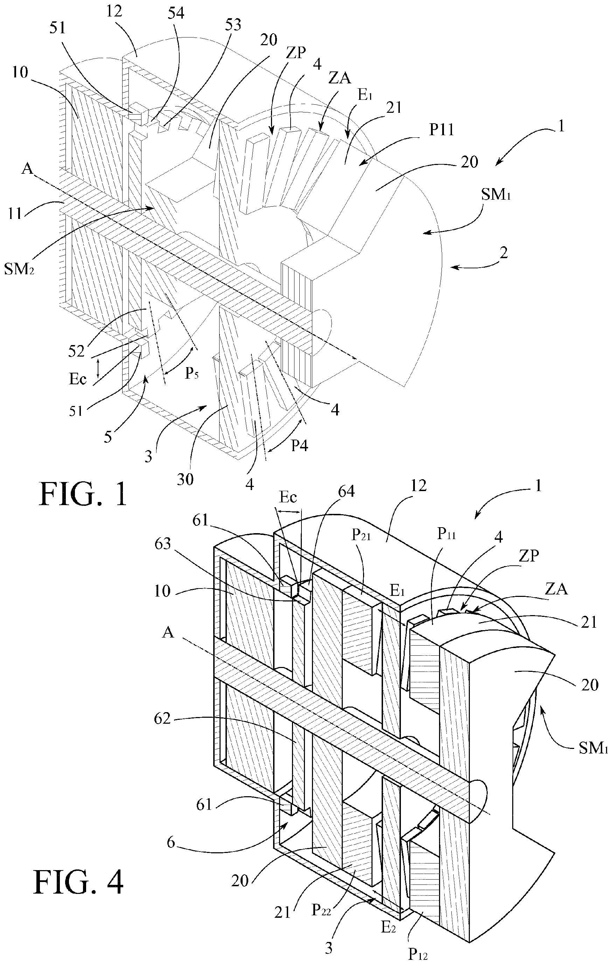

Dans les exemples illustrés dans les figures 1 à 8, l'arrangement magnétique 2 comporte deux structures magnétisantes SM₁, SM2, identiques, parallèles, disposées tête-bêche en regard l'une de l'autre et montées sur un arbre moteur 11. Elles comportent chacune une base 20 réalisée en matériau ferromagnétique, sur laquelle sont montés des aimants permanents 21 constituant au moins une paire de pôles magnétiques P₁₁, P₁₂ ; P₂₁, P₂₂ diamétralement opposés. Les pôles magnétiques Pu, P₂₁ et P₁₂, P₂₂ qui se font face dans le sens axial définissent lesdits entrefers de génération thermique E₁, E₂. Bien entendu, cet exemple n'est pas limitatif et l'arrangement magnétique 2 pourrait comporter plus de deux structures magnétisantes, chacune de ces structures pouvant également comporter plus de deux pôles magnétiques. Dans cet exemple, l'arrangement magnétique 2 est mobile par rapport aux éléments magnétocaloriques 4, l'arbre moteur 11 étant couplé en rotation à un dispositif d'entraînement 10 qui peut être un moteur ou tout autre moyen d'entrainement équivalent. Bien entendu, cet exemple n'est pas limitatif et le dispositif d'entraînement pourrait être couplé au support 3 portant lesdits éléments magnétocaloriques 4 pour le déplacer relativement par rapport à l'arrangement magnétique 2. Néanmoins, le mode de réalisation illustré a l'avantage de permettre de simplifier la construction mécanique dudit appareil 1, ainsi que les circuits fluidiques.

Dans les exemples illustrés dans les figures 1 à 8, l'appareil 1 comporte un seul support 3 portant des éléments magnétocaloriques 4. Bien entendu, cet exemple n'est pas limitatif et ledit appareil 1 pourrait comporter plus d'un support 3, notamment dans le cas d'un arrangement magnétique 2 comportant plus de deux structures magnétisantes. Dans ce cas, chaque support 3 constituerait un étage thermique dudit appareil 1, le nombre d'étages thermiques étant déterminé en fonction de la puissance thermique souhaitée pour ledit appareil 1. Le support 3 tel qu'illustré comporte un disque 30, réalisé de préférence en matériau thermiquement isolant, centré sur l'axe longitudinal A et solidaire d'un carter 12 enveloppant ledit appareil 1. Cette forme de disque n'est pas limitative et s'étend à une forme annulaire ou similaire. Les éléments magnétocaloriques 4 peuvent être constitués chacun d'un ou de plusieurs matériaux magnétocaloriques assemblés sous la forme d'un lit discret, formant une zone active ZA sur ledit support 3. Dans l'exemple illustré, les éléments magnétocaloriques 4 sont représentés sous la forme de parallélépipèdes rectangles. Ils sont disposés sur le disque 30 radialement par leur longueur et en une couronne centrée sur l'axe longitudinal A. La couronne a une dimension radiale sensiblement égale à la dimension radiale des pôles magnétiques P₁₁, P₂₁ et P₁₂, P₂₂ donc à celle des entrefers de génération thermique E₁, E₂. Les éléments magnétocaloriques 4sont séparés d'un pas angulaire P₄ de préférence constant. Du fait de la géométrie circulaire dudit support 3 et de la géométrie parallélépipédique desdits éléments magnétocaloriques 4, les éléments magnétocaloriques 4 sont séparés entre eux par des zones passives ZP dépourvues d'éléments magnétocaloriques 4, de forme sensiblement triangulaire. Bien entendu, la forme parallélépipédique des éléments magnétocaloriques 4 et leur disposition radiale ne sont pas limitatives, d'autres formes et dispositions pouvant être envisagées. Ainsi, à tire d'exemple, les éléments magnétocaloriques pourraient se présenter sous la forme de blocs de forme trapézoïdale permettant de réduire le volume des zones passives ZP.

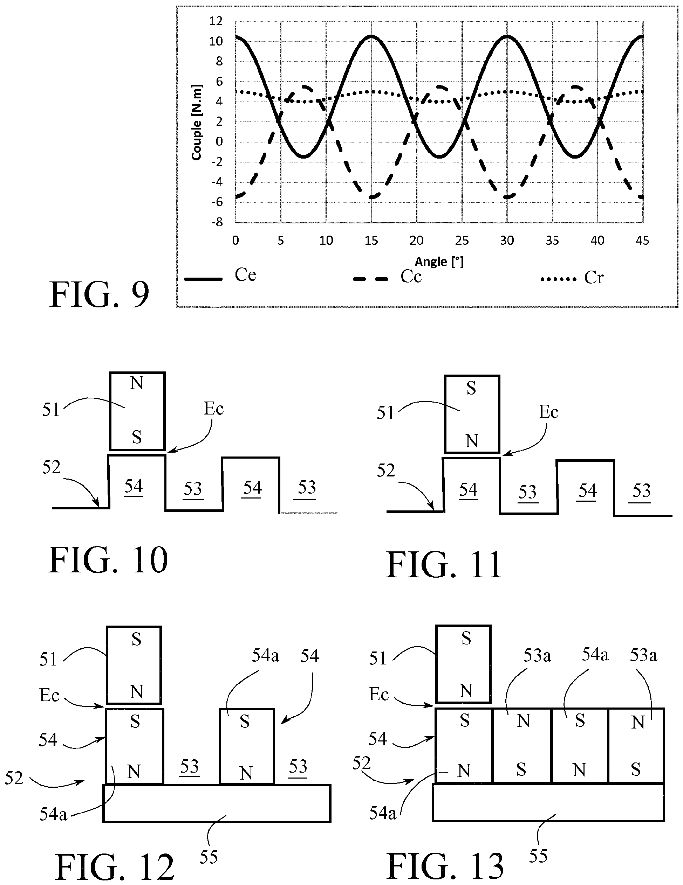

Dans les appareils thermiques magnétocaloriques 1 connus, et comme exposé précédemment dans l'état de l'art, la disposition des éléments magnétocaloriques 4 sur le support 3 génère des variations de perméabilité magnétique entre les zones actives ZA comportant des éléments magnétocaloriques 4 présentant une bonne perméabilité magnétique et les zones passives ZP dépourvues d'éléments magnétocaloriques présentant une perméabilité magnétique inférieure à celle des zones actives ZA. Lors du déplacement relatif de l'arrangement magnétique 2 par rapport aux éléments magnétocaloriques 4, ce phénomène génère au sein des entrefers de génération thermique E₁, E₂ une attraction ou une force magnétique plus importante au passage des zones actives ZA et inversement une attraction ou une force magnétique plus faible au passage des zones passives ZP séparant deux zones actives ZA consécutives. Ces variations d'effort magnétique impactent le fonctionnement du dispositif d'entraînement qui va fonctionner par à-coups générant un couple d'entrainement Ce oscillant, comme représenté par le diagramme de la figure 9 par la courbe en trait continu.

L'appareil thermique magnétocalorique 1 selon l'invention se différencie de l'état de l'art en ce qu'il comporte un dispositif de compensation magnétique 5-9 spécifiquement dédié, ajouté audit appareil, et couplé mécaniquement au dispositif d'entraînement 10 pour créer un couple de compensation magnétique Cc oscillant pour qu'il soit avantageusement en opposition de phase au couple d'entraînement Ce oscillant du dispositif d'entraînement, comme représenté par le diagramme de la figure 9 en trait interrompu court. Le but recherché par l'ajout d'un tel dispositif de compensation magnétique 5-9 est de générer un couple résultant Cr oscillant dont l'amplitude est inférieure à l'amplitude du couple d'entrainement Ce oscillant, tendant vers un couple résultant Cr constant, comme représenté par le diagramme de la figure 9 en pointillé. Pour ce faire, le dispositif de compensation magnétique 5-9 comporte au moins deux pièces, dont une première pièce magnétique et une seconde pièce magnétique ou au moins ferromagnétique, séparées entre elles et en regard l'une de l'autre par au moins un entrefer, appelé entrefer de compensation Ec. L'une des pièces est fixe par rapport à l'arrangement magnétique 2 et l'autre pièce est fixe par rapport au support 3, de sorte que l'une des pièces est entraînée par le dispositif d'entraînement 10 pour être déplacée relativement par rapport à l'autre pièce. Enfin, l'une des pièces comporte des zones de perméabilités magnétiques élevées alternées avec des zones perméabilités magnétiques faibles pour créer dans ledit entrefer de compensation Ec ladite force de compensation magnétique Cc oscillante.

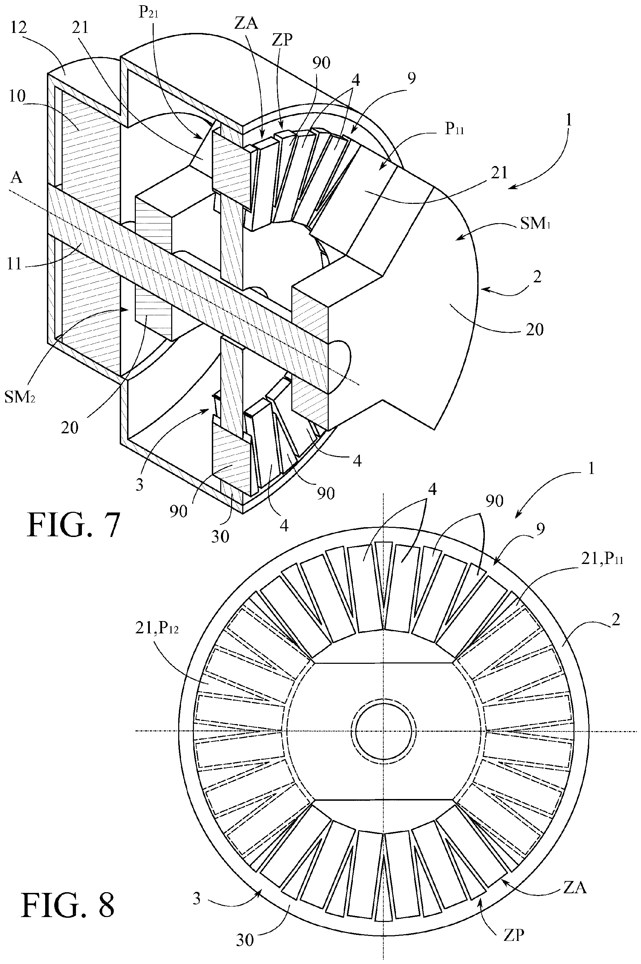

Ce dispositif de compensation magnétique 5-9 peut être disposé à l'extérieur des entrefers de génération thermique E₁, E₂ comme dans les figures 1 à 6, ou intégré à l'intérieur desdits entrefers pour un gain de place, comme dans les figures 7 et 8. Ces figures ne représentent l'appareil 1 que partiellement pour faciliter la compréhension des caractéristiques constructives du dispositif de compensation magnétique 5-9. Dans toutes les variantes de réalisation, le dispositif de compensation magnétique 5-9 est avantageux puisqu'il ne génère qu'une faible hystérésis voire aucune, ne consomme pas d'énergie, et ne produit pas de thermies, ce qui a son importance lorsqu'il est disposé du côté froid de l'appareil thermique magnétocalorique 1.

Les figures 1 à 6 illustrent plusieurs variantes de réalisation d'un dispositif de compensation magnétique 5-8 extérieur auxdits entrefers de génération thermique E₁, E₂. Une première variante de réalisation d'un dispositif de compensation magnétique 5 illustrée dans les figures 1 à 3 comporte deux aimants 51, sous la forme de blocs parallélépipédiques, fixés sur le carter 12 de l'appareil 1 par tout moyen de fixation approprié, et disposés de manière diamétralement opposée pour constituer la première pièce magnétique. Un seul aimant 51 ou plus de deux aimants 51 répartis de préférence à intervalles réguliers pourraient également convenir. Dans l'exemple représenté aux figures 1 à 3, le dispositif de compensation magnétique 5 comporte également une couronne 52, fixée sur l'arbre moteur 11 par tout moyen de fixation approprié, pour constituer la seconde pièce magnétique ou ferromagnétique. Cette couronne 52 peut être annulaire ou formée d'un disque plein comme représenté. Les aimants 51 et la couronne 52 sont, dans cette variante, alignés radialement et séparés entre eux par un entrefer, appelé « entrefer de compensation Ec » qui s'étend radialement et dans lequel circule un champ magnétique générant une attraction ou force magnétique. Les aimants 51 sont de préférence des aimants permanents Nord-Sud indépendants, dont le champ magnétique se referme sur eux-mêmes, les faces Nord-Sud étant perpendiculaires audit entrefer de compensation Ec. La couronne 52 est par exemple crénelée pour présenter en regard des aimants 51 un profil alternant des creux 53 et des dents 54 pour générer une alternance de petits et de grands écarts dans l'entrefer de compensation Ec. La couronne 52 peut être indépendamment réalisée dans un matériau ferromagnétique ou dans un matériau magnétique. Si la couronne 52 est réalisée en matériau ferromagnétique, les creux 53 et les dents 54 sont taillés dans la masse d'une roue comme représenté schématiquement dans les figures 10 et 11. Dans ce cas, les aimants 51 peuvent être orientés indépendamment pour présenter dans l'entrefer de compensation Ec aussi bien une face Sud qu'une face Nord. Si la couronne 52 est réalisée en matériau magnétique, les dents 54 peuvent être formées par des aimants 54a portés de préférence par un support de couronne 55 en matériau amagnétique, comme représenté schématiquement à la figure 12. Dans ce cas, les aimants 54a formant les dents 54 sont de préférence des aimants permanents Nord-Sud indépendants, comme les aimants 51, et sont orientés pour que les faces des aimants 51, 54a en regard dans l'entrefer de compensation Ec soient de polarités inverses. Dans la variante de réalisation représentée à la figure 13, les dents 54 et l'équivalent des creux 53 peuvent être formés par des aimants 54a, 53a portés par un support de couronne 55 en matériau amagnétique, tels que des aimants permanents Nord-Sud indépendants. Dans ce cas, la polarité des aimants 53a remplaçant les creux 53 est inversée par rapport à la polarité des aimants 54a formant les dents 54 pour que les faces des aimants 51, 54a et 51, 53a en regard dans l'entrefer de compensation Ec soient de polarités inverses au niveau des dents 54 et de même polarité au niveau des creux 53.

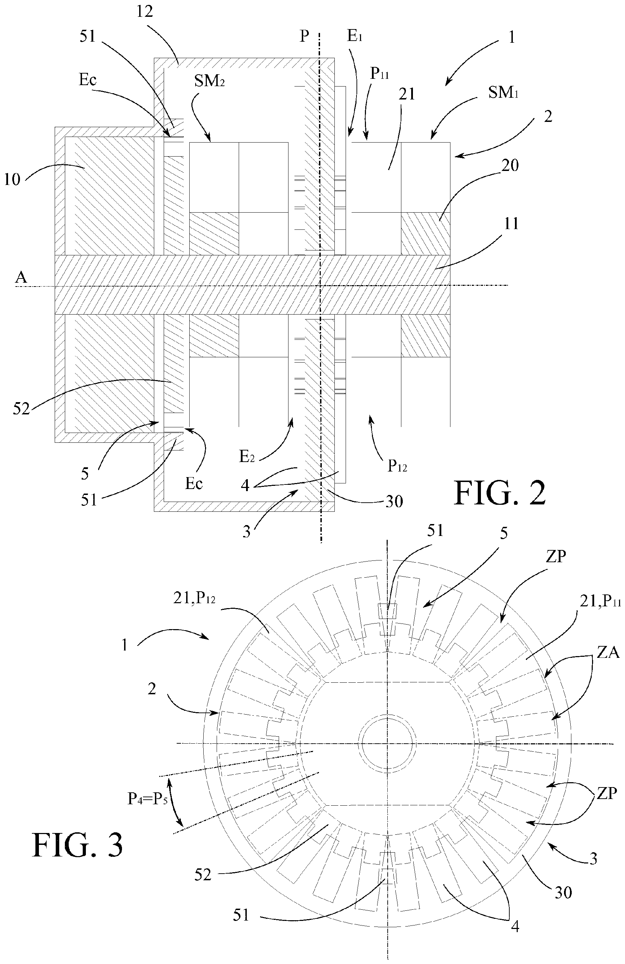

De par la forme circulaire de la couronne 52, les creux 53 ou l'équivalent des creux, et les dents 54 peuvent présenter une section sensiblement trapézoïdale, bien qu'une section carrée ou rectangulaire puisse également convenir. De préférence, les dents 54 et les creux 53 présentent en regard desdits aimants 51 une surface sensiblement identique, telle qu'une surface carrée ou rectangulaire. Cette alternance de petits et de grands écarts dans l'entrefer de compensation Ec génère ainsi une alternance de perméabilités magnétiques différentes dans ledit entrefer de compensation Ec, créant une attraction ou une force magnétique plus importante au passage des dents 54 correspondant à une perméabilité magnétique élevée, et inversement une attraction ou une force magnétique plus faible au passage des creux 53 séparant deux dents 54 consécutives correspondant à une perméabilité magnétique faible. Les dents 54 de la couronne 52 sont de préférence séparées d'un pas angulaire Pc sensiblement égal au pas angulaire P₄ des éléments magnétocaloriques 4 sur leur support 30. Les deux aimants 51 peuvent être alignés axialement sur deux zones passives ZP diamétralement opposées dudit support 3, comme illustré par transparence à la figure 3, ou sur deux zones actives ZA ou encore sur tout autre endroit du support 3, l'essentiel étant qu'ils génèrent avec la couronne 52 un couple de compensation magnétique Cc qui est en opposition de phase avec le couple d'entraînement Ce. Lorsque l'arrangement magnétique 2 tourne autour de l'axe longitudinal A, la couronne 52 qui tourne de manière synchrone avec ledit arrangement magnétique 2 va créer avec les aimants 51 dans les deux entrefers de compensation Ec une alternance de forces magnétiques différentes générant un couple de compensation magnétique Cc oscillant en opposition de phase avec le couple d'entraînement Ce dudit arrangement magnétique 2 comme représentés à la figure 9. La figure 3 illustre tout particulièrement une position d'équilibre instable de l'arrangement magnétique 2 par rapport au support 3 dans laquelle chaque aimant permanent 21 dudit arrangement magnétique 2 est dans une position équilibrée, à cheval sur un secteur angulaire s'étendant entre deux demi zones passives ZP. Dans cette position d'équilibre instable, le dispositif de compensation magnétique 5 doit soit n'avoir aucune influence sur le dispositif d'entraînement 10, soit générer un effort facilitant la sortie de la position stable. Mais dans tous les cas, dès la sortie partielle de cette position d'équilibre instable, le dispositif de compensation magnétique 5 doit générer un couple de compensation magnétique Cc venant s'opposer à l'effort naturel de l'arrangement magnétique 2 tendant à revenir à sa position stable. C'est la raison pour laquelle, dans la position d'équilibre instable illustrée à la figure 3, le dispositif de compensation magnétique 5 est également dans une position d'équilibre en ce sens que les aimants 51 sont disposés face à des creux 53 de la couronne 52 pour ne pas générer de couple de compensation magnétique Cc.

La figure 4 illustre une deuxième variante de réalisation d'un dispositif de compensation magnétique 6 qui se différencie de la première variante de réalisation selon les figures 1 à 3 par la disposition relative de la couronne 62 par rapport aux aimants 61. Comme précédemment, les deux aimants 61 sont fixés sur le carter 12 de l'appareil 1, disposés de manière diamétralement opposée et par exemple alignés axialement sur deux zones passives ZP du support 3. La couronne 62 est fixée sur l'arbre moteur 11 mais décalée axialement par rapport aux aimants 61 pour délimiter entre eux deux entrefers de compensation Ec qui s'entendent axialement. Dans cet exemple, la couronne 62 présente en regard des aimants 61 un profil alternant des creux 63 et des dents 64 qui créent une alternance d'absences et de présences d'entrefers de compensation Ec ayant le même effet technique que précédemment, à savoir créer une alternance de perméabilités magnétiques différentes qui est en opposition de phase à celle générée par le support 3 d'éléments magnétocaloriques 4.

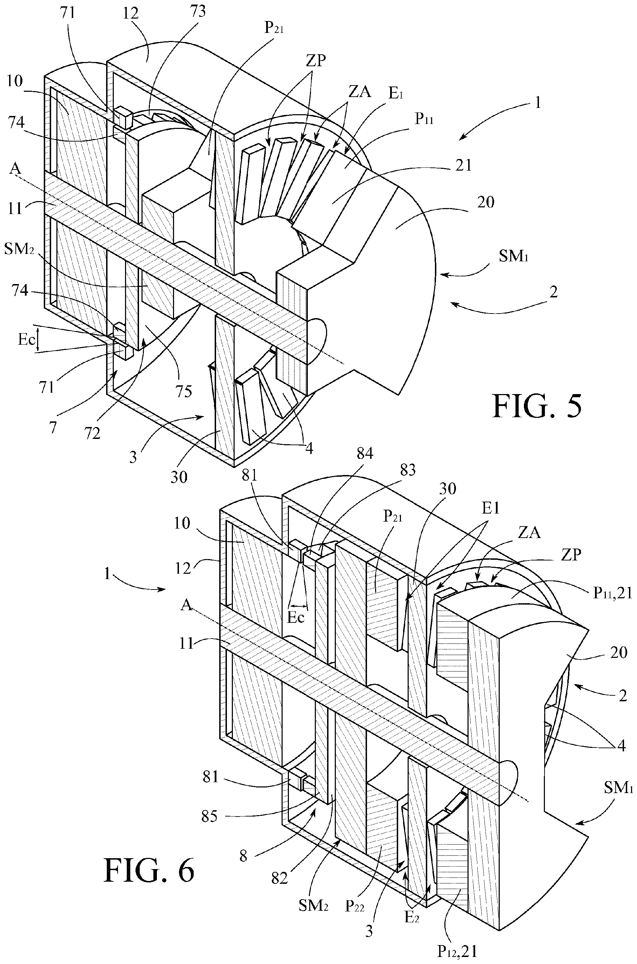

La figure 5 illustre une troisième variante de réalisation d'un dispositif de compensation magnétique 7 dont la disposition relative de la couronne 72 par rapport aux aimants 71 est similaire à la première variante de réalisation illustrée dans les figures 1 à 3, à savoir qu'ils sont alignés radialement et séparés par deux entrefers de compensation Ec qui s'étendent radialement. La différence réside dans la conception de la couronne 72 qui est constituée d'un support de couronne 75 réalisé dans un matériau amagnétique et d'une pluralité de dents 74 réalisées dans un matériau ferromagnétique ou magnétique, rapportées sur le pourtour du support de couronne 75, et orientées axialement pour créer un entrefer de compensation Ec avec chacun des aimants 71. Les dents 74 sont réparties à intervalles réguliers pour respecter un pas angulaire Pc sensiblement égal au pas angulaire P₄ qui séparent les éléments magnétocaloriques 4 adjacents, et définissent entre elles des creux 73. L'alternance des dents 74 et des creux 73 crée une alternance de présences et d'absences d'entrefers de compensation Ec ayant le même effet technique que précédemment, à savoir créer une alternance de perméabilités magnétiques différentes qui est en opposition de phase à celle générée par le support 3 d'éléments magnétocaloriques 4.

La figure 6 illustre une quatrième variante de réalisation d'un dispositif de compensation magnétique 8 qui se différencie de la troisième variante de réalisation de la figure 5 par la disposition relative de la couronne 82 par rapport aux aimants 81, à savoir qu'ils sont décalés axialement et séparés par deux entrefers de compensation Ec qui s'étendent axialement. Comme dans l'exemple de la figure 5, la couronne 82 est constituée d'un support de couronne 85 réalisé dans un matériau amagnétique et d'une pluralité de dents 84 réalisées dans un matériau ferromagnétique ou magnétique, rapportées sur le pourtour dudit support de couronne 85, et orientées axialement pour créer lesdits entrefers de compensation Ec avec les aimants 81. Comme précédemment, les dents 84 définissent entre elles des creux 73 et créent une alternance de petits et de grands écarts dans les entrefers de compensation Ec ayant le même effet technique que dans les exemples précédents, à savoir créer une alternance de perméabilités magnétiques différentes qui est en opposition de phase à celle générée par le support 3 d'éléments magnétocaloriques 4.

Ces différentes variantes de réalisation d'un dispositif de compensation magnétique 5-8 disposé à l'extérieur de l'entrefer de génération thermique E₁, E₂ dudit appareil 1 illustrent quelques combinaisons possibles entre les première et seconde pièces magnétiques ou magnétique/ferromagnétique composant ledit dispositif de compensation magnétique ajouté audit appareil. Ces exemples ne sont pas limitatifs et s'étendent à toute autre variante de réalisation technique équivalente. Les pièces fixe et mobile, qui sont constituées par les aimants fixes d'une part et par la couronne entraînée en rotation par le dispositif d'entrainement 10 d'autre part, peuvent être inversées en prévoyant la couronne fixe et les aimants couplés au dispositif d'entraînement 10 par tout moyen de couplage approprié. Le nombre d'aimants n'est pas obligatoirement égal à deux et peut être égal à un ou à plus de deux, répartis à intervalles réguliers pour équilibrer les forces magnétiques au niveau du dispositif d'entrainement 10. Les matériaux utilisés d'une part pour la première pièce magnétique, à savoir les aimants permanents, et d'autre part pour la seconde pièce magnétique ou ferromagnétique, à savoir la couronne, peuvent être différents ou combinés, l'essentiel étant de générer une force magnétique de compensation Cc dans l'entrefer de compensation Ec qui les sépare, comme expliqué ci-dessus.

En complément, le dispositif de compensation magnétique 5-8 tel qu'il vient d'être décrit peut comporter en outre des moyens de réglage de l'écart de l'entrefer de compensation Ec dans le but d'ajuster la force de compensation magnétique oscillante à la force d'entraînement oscillante du dispositif d'entraînement 10. Concrètement, les aimants 51, 71 des dispositifs de compensation magnétique 5 et 7, dans lesquels les entrefers de compensation Ec s'étendent radialement, peuvent être montés sur des chariots (non représentés) mobiles radialement et couplés à un actionneur piloté par une unité de commande (non représentée) en fonction des données d'un capteur d'effort (non représenté) associé au dispositif d'entraînement 10 pour ajuster l'écart de l'entrefer de compensation Ec délimité entre les aimants 51, 71 et les dents 54, 74 de la couronne 52, 72. Cet exemple de réalisation n'est pas limitatif et s'étend à tout autre moyen de réglage de l'écart dudit entrefer de compensation Ec techniquement équivalent.

Les figures 7 et 8 illustrent une cinquième variante de réalisation d'un dispositif de compensation magnétique 9, dans laquelle il est totalement intégré dans l'entrefer de génération thermique E₁, E₂ dudit appareil 1, permettant ainsi un gain d'encombrement. La première pièce magnétique du dispositif de compensation 9 est dans ce cas confondue avec les aimants permanents 21 appartenant à l'arrangement magnétique 2, qui sont entraînés en rotation par le dispositif d'entraînement 10. Et la seconde pièce ferromagnétique du dispositif de compensation 9 est dans ce cas constituée par une pluralité d'éléments ferromagnétiques 90 ajoutées sur le support 3, dans les zones passives ZP dépourvues d'éléments magnétocaloriques 4. Ces éléments ferromagnétiques 90 présentent une section triangulaire qui s'inscrit dans l'espace libre entre deux éléments magnétocaloriques 4 consécutifs. Ainsi, la présence de ces éléments ferromagnétiques 90 dans les zones passives ZP du support 3 crée avec les aimants permanents 21 de l'arrangement magnétique 2 un couple de compensation magnétique Cc oscillant qui est en opposition de phase avec le couple d'entraînement Ce oscillant du dispositif d'entraînement 10. En d'autres termes, ces éléments ferromagnétiques 90 ajoutés tendent à créer avec les éléments magnétocaloriques 4 une continuité de la perméabilité magnétique dans ledit support 3, réduisant voire supprimant les à-coups dans le dispositif d'entraînement 10.

### Possibilités d'application industrielle :

Le dispositif de compensation magnétique 5-9 selon l'invention peut être réalisé par tout procédé de fabrication connu. Les pièces magnétiques, ferromagnétiques et amagnétiques des différents dispositifs de compensation magnétique décrits peuvent être réalisées par exemple, pour le matériau magnétique (dur) : une ferrite, un alliage NdFeB composé de néodyme, fer et bore, un alliage AlNiCo composé principalement d'aluminium, nickel et cobalt, un alliage SmCo composé de samarium et cobalt, ou similaire ; pour le matériau ferromagnétique : du fer, de l'acier (hors inox, par exemple : ferritique ou martensitique), du nickel ou similaire ; et pour le matériau amagnétique : typiquement de l'aluminium, de l'inox, des matières synthétiques (plastiques), une résine époxy avec ou sans fibres de verre.

Les éléments magnétocaloriques 4 et les éléments ferromagnétiques 90 de l'appareil illustré dans les figures 7 et 8 peuvent être intégrés au support 3 par tout procédé d'assemblage connu selon que les éléments ferromagnétiques nécessitent une simple liaison mécanique ou un logement étanche. Le support 3 recevant ces éléments 4 et 90 peut ainsi être constitué d'un boitier avec couvercle étanche ou non, vissé, soudé, collé ou similaire. A titre d'exemple, les éléments ferromagnétiques 90 peuvent être par exemple collés, surmoulés, co-moulés, clippés, ou encore insérés en force dans le boîtier.

Par ailleurs et pour limiter les pertes thermiques vers l'extérieur de l'appareil et entre l'extrémité chaude et l'extrémité froide des éléments magnétocaloriques 4, le support 3 est de préférence réalisé en matière isolante et amagnétique, telle qu'une matière synthétique comme par exemple un polyamide dans le cas d'une pièce injectée, ou un polyétheréthercétone PEEK dans le cas d'une pièce usinée, une résine époxy chargée en fibres de verre, ou similaire.

Il ressort clairement de cette description que l'invention permet d'atteindre, par un dispositif de compensation magnétique 5-9 spécifiquement dédié et conçu pour cette fonction, ce dispositif étant mécaniquement simple, économique, peu encombrant, facile à mettre en œuvre et facilement adaptable, les buts fixés, à savoir une compensation magnétique automatique et totale du couple ou de la force d'entraînement dans un appareil thermique magnétocalorique 1, favorisant un déplacement relatif de l'arrangement magnétique 2 par rapport aux éléments magnétocaloriques 4 le plus constant possible, permettant ainsi de limiter la fatigue des organes en mouvement et d'optimiser le rendement thermique dudit appareil 1.

La présente invention n'est pas limitée aux exemples de réalisation décrits mais s'étend à toute modification et variante évidentes pour un homme du métier dans la limite des revendications annexées.

## Revendications

1. Appareil thermique magnétocalorique (1) comportant un arrangement magnétique (2) définissant au moins un entrefer, appelé « entrefer de génération thermique (E₁, E₂) », dans lequel circule un champ magnétique, au moins un support (3) placé dans le plan médian (P) dudit au moins un entrefer de génération thermique (E₁, E₂) et portant des éléments magnétocaloriques (4) répartis dans des zones actives (ZA) séparées par des zones passives (ZP) dépourvues d'éléments magnétocaloriques (4), les zones actives (ZA) ayant une perméabilité magnétique supérieure aux zones passives (ZP), un dispositif d'entraînement (10) agencé pour déplacer ledit arrangement magnétique (2) ou ledit au moins un support (3) relativement l'un par rapport à l'autre afin de faire entrer et sortir lesdits éléments magnétocaloriques (4) dudit au moins un entrefer de génération thermique (E₁, E₂) pour qu'ils subissent des cycles magnétiques successifs, lesdits cycles magnétiques générant au sein dudit dispositif d'entraînement (10) une force d'entrainement (Ce) oscillante due à une alternance de perméabilités magnétiques différentes entre les zones actives (ZA) et les zones passives (ZP) dudit support (3), appareil comportant en outre un dispositif de compensation magnétique agencé pour créer une force de compensation magnétique (Cc) oscillante déphasée par rapport à la force d'entraînement (Ce) oscillante dudit dispositif d'entraînement (10) pour générer une force résultante (Cr) oscillante dont l'amplitude est inférieure à l'amplitude de la force d'entrainement (Ce) oscillante, **caractérisé en ce que** ledit dispositif de compensation magnétique est un dispositif de compensation magnétique (5-9) spécifique, au moins en partie ajouté audit appareil, et agencé pour créer une force de compensation magnétique (Cc) oscillante qui est en opposition de phase à la force d'entraînement (Ce) oscillante dudit dispositif d'entraînement (10) pour tendre vers une force résultante (Cr) constante, et **en ce qu'**il comporte une première pièce magnétique et une seconde pièce magnétique ou ferromagnétique, définissant entre elles un entrefer, appelé entrefer de compensation (Ec), dans lequel circule un champ magnétique, l'une des deux pièces étant couplée mécaniquement audit dispositif d'entraînement (10) pour être déplacée de manière synchrone avec ledit arrangement magnétique (2) ou ledit support (3) relativement par rapport à l'autre pièce, l'une au moins des deux pièces comportant des zones de perméabilités magnétiques élevées alternées avec des zones perméabilités magnétiques faibles pour créer dans ledit entrefer de compensation (Ec) ladite force de compensation magnétique (Cc) oscillante.

2. Appareil selon la revendication 1, ayant une structure rotative autour d'un axe longitudinal (A), dans lequel ledit au moins un support (3) présente une forme circulaire centrée sur ledit axe longitudinal (A), lesdits éléments magnétocaloriques (4) étant répartis sur ledit au moins un support (3) dans lesdites zones actives (ZA) séparées entre-elles d'un pas angulaire (P₄) constant, et ledit dispositif d'entraînement (10) étant agencé pour déplacer ledit arrangement magnétique (2) ou ledit au moins un support (3) en rotation relative de l'un par rapport à l'autre autour dudit axe longitudinal (A), ledit dispositif de compensation magnétique (5-8) étant disposé à l'extérieur de l'entrefer de génération thermique (E₁, E₂), et ladite première pièce magnétique comportant au moins un aimant (51, 61, 71, 81) disposé radialement à distance dudit axe longitudinal (A), et ladite seconde pièce magnétique ou ferromagnétique comportant une couronne (52, 62, 72, 82), centrée sur l'axe longitudinal (A), présentant en regard dudit au moins un aimant (51, 61, 71, 81) une alternance de zones de perméabilités magnétiques élevées et faibles dans ledit entrefer de compensation (Ec) .

3. Appareil selon la revendication 2, **caractérisé en ce que** ledit au moins un aimant (51, 61, 71, 81) est monté sur une partie fixe (12) dudit appareil (1) et ladite couronne (52, 62, 72, 82) est couplée en rotation avec ledit dispositif d'entraînement (10).

4. Appareil selon la revendication 2, **caractérisé en ce que** ledit au moins un aimant est couplé en rotation avec ledit dispositif d'entraînement (10) et ladite couronne est montée sur une partie fixe (12) dudit appareil (1).

5. Appareil selon l'une quelconque des revendications 2 à 4, **caractérisé en ce que** ledit au moins un aimant (51, 71) et ladite couronne (52, 72) sont alignés radialement, et **en ce que** ledit entrefer de compensation (Ec) s'étend radialement.

6. Appareil selon l'une quelconque des revendications 2 à 4, **caractérisé en ce que** ledit au moins un aimant (61, 81) et ladite couronne (62, 82) sont alignés axialement, et **en ce que** ledit entrefer de compensation (Ec) s'étend axialement.

7. Appareil selon la revendication 2, **caractérisé en ce que** ladite couronne (52, 62, 72, 82) est crénelée et comporte une alternance de dents (54, 64, 74, 84) et de creux (53, 63, 73, 83), lesdites dents (54, 64, 74, 84) étant séparées d'un pas angulaire sensiblement égal au pas angulaire (P4) séparant les zones actives (ZA) dudit support (3).

8. Appareil selon la revendication 7, **caractérisé en ce que** ladite couronne (52, 62, 72, 82) est réalisée en matériau ferromagnétique.

9. Appareil selon la revendication 7, **caractérisé en ce que** ladite couronne (72, 82) comporte un support de couronne (75, 85) en matériau amagnétique et des éléments (74, 84) ferromagnétiques disposés en couronne sur ledit support de couronne (75, 85), formant des dents séparées d'un pas angulaire sensiblement égal au pas angulaire (P₄) séparant les zones actives (ZA) dudit support (3).

10. Appareil selon la revendication 7, **caractérisé en ce que** ladite couronne (52) comporte des aimants (54a) formant les dents (54) alternées avec des creux (53), lesdits aimants (54a) étant montés sur un support de couronne (55) en matériau amagnétique, et orientés pour que les faces des aimants (51, 54a) en regard dans ledit entrefer de compensation (Ec) soient de polarités opposées.

11. Appareil selon la revendication 2, **caractérisé en ce que** ladite couronne (52) comporte une succession d'aimants (53a, 54a) de polarités inversées et disposés de manière alternée pour que les faces des aimants (51, 53a, 54a) en regard dans ledit entrefer de compensation (Ec) soient alternativement de polarités opposées et de même polarité.

12. Appareil selon l'une quelconque des revendications 2 à 11, **caractérisé en ce que** le dispositif de compensation magnétique (5-8) comporte en outre des moyens de réglage de l'écart dudit entrefer de compensation (Ec) pour ajuster la force de compensation magnétique oscillante à la force d'entraînement oscillante dudit dispositif d'entraînement (10).

13. Appareil selon la revendication 12, **caractérisé en ce que** ledit au moins un aimant (51, 71) est monté sur un chariot, et **en ce que** lesdits moyens de réglage comportent un actionneur couplé audit chariot et piloté par un capteur d'effort associé audit dispositif d'entraînement (10).

14. Appareil selon la revendication 1, ayant une structure rotative autour d'un axe longitudinal (A), dans lequel ledit au moins un support (3) présente une forme sensiblement circulaire centré sur ledit axe longitudinal (A), lesdits éléments magnétocaloriques (4) sont répartis sur ledit au moins un support (3) dans des zones actives (ZA) séparées entre-elles d'un pas angulaire (P₄) constant, ledit arrangement magnétique (2) comporte au moins deux aimants permanents (21) de polarités opposées délimitant entre eux ledit entrefer de génération thermique (E₁, E₂), et ledit dispositif d'entraînement (10) est agencé pour déplacer ledit arrangement magnétique (2) ou ledit au moins un support (3) en rotation relative de l'un par rapport à l'autre autour dudit axe longitudinal (A), **caractérisé en ce que** ledit dispositif de compensation magnétique (9) est disposé à l'intérieur de l'entrefer de génération thermique (E₁, E₂), **en ce que** ladite première pièce magnétique est confondue avec lesdits au moins deux aimants permanents (21) dudit arrangement magnétique (2), et **en ce que** ladite seconde pièce comporte des éléments ferromagnétiques (90) ajoutés sur ledit support (3), dans les zones passives (ZP) dépourvues d'éléments magnétocaloriques (4), pour créer ladite force de compensation (Cc) magnétique oscillante.

15. Appareil selon la revendication 14, **caractérisé en ce que** ledit arrangement magnétique (2) est monté sur une partie fixe (12) dudit appareil (1) et ledit support (3) est couplé en rotation avec ledit dispositif d'entraînement (10).

16. Appareil selon la revendication 14, **caractérisé en ce que** ledit arrangement magnétique (2) est couplé en rotation avec ledit dispositif d'entraînement (10) et ledit support (3) est monté sur une partie fixe (12) dudit appareil (1).

## Patentansprüche

1. Magnetokalorisches Thermogerät (1) mit einer Magnetanordnung (2), die mindestens einen Spalt definiert, der «Wärmeerzeugungsspalt (E₁, E₂) » genannt wird, in dem sich ein Magnetfeld bewegt, mit mindestens einem Halter (3), untergebracht in der Mittelebene (P) dieses mindestens einen Wärmeerzeugungsspaltes (E₁, E₂) der magnetokalorische Elemente (4) trägt, die in den aktiven Zonen (ZA) verteilt sind, die durch passive Zonen (ZP) ohne magnetokalorische Elemente getrennt sind, wobei die aktiven Zonen (ZA) eine magnetische Permeabilität haben, die höher ist als die passiven Zonen (ZP), mit einer Antriebsvorrichtung (10), ausgelegt um diese Magnetanordnung (2) oder diesen mindestens einen Halter (3) relativ zueinander zu verschieben, um diese magnetokalorischen Elemente (4) in diesen oder aus diesem mindestens einen Wärmeerzeugungsspalt (E₁, E₂) zu verschieben, damit diese aufeinanderfolgende magnetische Zyklen durchlaufen, diese magnetischen Zyklen erzeugen dabei innerhalb dieser Antriebsvorrichtung (10) eine oszillierende Antriebskraft (Ce) aufgrund eines Alternierens der magnetischen Permeabilitäten, die zwischen den aktiven Zonen (ZA) und den passiven Zonen (ZP) dieses Halters (3) unterschiedlich sind, das Gerät enthält außerdem eine Vorrichtung zur magnetischen Kompensation, ausgelegt um eine oszillierende magnetische Kompensationskraft (Cc) zu schaffen, phasenversetzt gegenüber der oszillierenden Antriebskraft (Ce) dieser Antriebsvorrichtung (10) zur Erzeugung einer oszillierenden resultierenden Kraft (Cr) deren Amplitude kleiner ist als die Amplitude der oszillierenden Antriebskraft (Ce), **dadurch gekennzeichnet, dass** diese Vorrichtung zur magnetischen Kompensation eine spezifische Vorrichtung zur magnetischen Kompensation (5-9) ist, die zumindest zum Teil zu diesem Gerät hinzugefügt wurde und dazu ausgelegt, eine oszillierende magnetische Kompensationskraft (Cc) zu erzeugen, die entgegengesetzt zur Phase der oszillierenden Antriebskraft (Ce) dieser Antriebsvorrichtung (10) ist, um auf eine konstante resultierenden Kraft (Cr) abzuzielen, und dass sie ein erstes magnetisches Teil und ein zweites magnetisches oder ferromagnetisches Teil enthält, die zwischen sich einen Spalt definieren, Kompensationsspalt (Ec) genannt, in dem ein Magnetfeld zirkuliert, eines der beiden Teile ist mechanisch mit dieser Antriebsvorrichtung (10) gekoppelt, um in synchroner Art und Weise mit dieser Magnetanordnung (2) oder diesem Halter (3) relativ bezogen auf das andere Teil, verbunden zu werden, mindestens eines der beiden Teile enthält Zonen mit hohen magnetischen Permeabilitäten, alternierend mit Zonen schwacher magnetischer Permeabilität, um in diesem Kompensationsspalt (Ec) diese oszillierende magnetische Kompensationskraft (Ce) zu erzeugen.

2. Gerät nach Anspruch 1, mit einer um eine Längsachse (A) herum drehbaren Struktur, in der der mindestens ein Halter (3) eine Ringform aufweist, die auf dieser Längsachse (A) zentriert ist, die erwähnten magnetokalorischen Elemente (4) sind über diesen mindestens einen Halter (3) in den erwähnten aktiven Zonen (ZA) verteilt, die voneinander durch einen konstanten Winkelschritt (P₄) getrennt sind, und diese Antriebsvorrichtung (10) ist ausgelegt, um die erwähnte Magnetanordnung (2) oder den erwähnten mindestens einen Halter (3) in Drehung relativ zueinander um diese Längsachse (A) zu versetzen, die erwähnte magnetische Kompensationsvorrichtung (5-8) ist dabei außerhalb des Erzeugungsspaltes (E₁, E₂) angeordnet, und dadurch dass dieses erste Magnetteil mindestens einen Magneten (51, 61, 71, 81) enthält, der radial in einem Abstand zur erwähnten Längsachse (A) angeordnet ist, und dass das erwähnte zweite magnetische oder ferromagnetische Teil einen Kranz (52, 62, 72, 82) enthält, zentriert auf der Längsachse (A), der gegenüber diesem mindestens einen Magneten (51, 61, 71, 81) alternierende Zonen mit hohen und niedrigen magnetischen Permeabilitäten in dem erwähnten Kompensationsspalt (Ec) enthält.

3. Gerät nach Anspruch 2, **dadurch gekennzeichnet, dass** dieser mindestens eine Magnet (51, 61, 71, 81) auf einem festen Teil (12) dieses Gerätes (1) montiert ist und dass der erwähnte Kranz (52, 62, 72, 82) drehbar mit der erwähnten Antriebsvorrichtung verbunden ist.

4. Gerät nach Anspruch 2, **dadurch gekennzeichnet, dass** der erwähnte mindestens eine Magnet drehbar mit der erwähnten Antriebsvorrichtung (10) verbunden ist und dass der erwähnte Kranz auf einem festen Teil (12) dieses Gerätes (1) montiert ist.

5. Gerät nach einem beliebigen der Ansprüche 2 bis 4, **dadurch gekennzeichnet, dass** dieser mindestens eine Magnet (51, 71) und dieser Kranz (52, 72) radial ausgerichtet sind und dass der erwähnte Kompensationsspalt (Ec) radial verläuft.

6. Gerät nach einem beliebigen der Ansprüche 2 bis 4, **dadurch gekennzeichnet, dass** dieser mindestens eine Magnet (61, 81) und dieser Kranz (62, 82) axial ausgerichtet sind und dass der erwähnte Kompensationsspalt (Ec) axial verläuft.

7. Gerät nach Anspruch 2, **dadurch gekennzeichnet, dass** der erwähnte Kranz (52, 62, 72, 82) gezahnt ist und abwechselnd Zähne (54, 64, 74, 84) und Hohlräume (53, 63, 73, 83) enthält, diese Zähne (54, 64, 74, 84) sind dabei durch einen Winkelschritt getrennt, der im Wesentlichen dem Winkelschritt (P₄) entspricht, der die aktiven Zonen (ZA) von diesem Halter (3) trennt.

8. Gerät nach Anspruch 7, **dadurch gekennzeichnet, dass** dieser Kranz (52, 62, 72, 82) aus ferromagnetischem Material hergestellt wird.

9. Gerät nach Anspruch 7, **dadurch gekennzeichnet, dass** dieser Kranz (72, 82) einen Kranzhalter (75, 85) aus nicht magnetischem Material enthält, sowie ferromagnetische Elemente (74, 84), kranzförmig auf diesem Kranzhalter (75, 85) angeordnet, die Zähne bilden, die durch einen Winkelschritt getrennt sind, der im Wesentlichen gleich dem Winkelschritt (P₄) ist, der die aktiven Zonen (ZA) dieses Halters (3) voneinander trennt.

10. Gerät nach Anspruch 7, **dadurch gekennzeichnet, dass** dieser Kranz (52) Magnete (54a) enthält, die Zähne (54) bilden, die mit Hohlräumen (53) abwechseln, diese Magnete (54a) sind auf einem Kranzhalter (55) aus nicht magnetischem Material montiert und so ausgerichtet, dass die Seiten der Magnete (51, 54a), die in diesem Kompensationsspalt (Ec) einander gegenüberliegen, entgegengesetzte Polaritäten haben.

11. Gerät nach Anspruch 2, **dadurch gekennzeichnet, dass** dieser Kranz (52) aufeinanderfolgende Magnete (53a, 54a) mit umgekehrten Polaritäten enthält, die abwechselnd angeordnet sind, damit die Seiten der einander gegenüberliegenden Magnete (51, 53a, 54a) im erwähnten Kompensationsspalt (Ec) abwechselnd eine unterschiedliche Polarität und dieselbe Polarität haben.

12. Gerät nach einem beliebigen der Ansprüche 2 bis 11, **dadurch gekennzeichnet, dass** die Vorrichtung zur magnetischen Kompensation (5-8) außerdem Mittel zur Einstellung des Abstandes des erwähnten Kompensationsspaltes (Ec) enthält, um die oszillierende magnetische Kompensationskraft an die Antriebskraft der erwähnten Antriebsvorrichtung (10) anzupassen.

13. Gerät nach Anspruch 12, **dadurch gekennzeichnet, dass** der mindestens eine Magnet (51, 71) auf einem Schlitten montiert ist und dass diese Einstellungsmittel einen Schalter umfassen, der mit diesem Schlitten verbunden ist und von einem mit dieser Antriebsvorrichtung (10) verbundenen Kraftsensor gesteuert wird.

14. Gerät nach Anspruch 1, mit einer drehbaren Struktur um eine Längsachse (A) herum, in der der mindestens eine Halter (3) im Wesentlichen eine Ringform aufweist, die auf dieser Längsachse (A) zentriert ist, die erwähnten magnetokalorischen Elemente (4) sind über diesen mindestens einen Halter (3) in den erwähnten aktiven Zonen (ZA) verteilt, die voneinander durch einen konstanten Winkelschritt (P₄) getrennt sind und diese Magnetanordnung (2) enthält mindestens zwei Permanentmagnete (21) mit entgegengesetzter Polarität, die zwischen sich den erwähnten Wärmeerzeugungsspalt (E₁, E₂) begrenzen, und diese Antriebsvorrichtung (10) ist ausgelegt, um die erwähnte Magnetanordnung (2) oder den erwähnten mindestens einen Halter (3) in Drehung relativ zueinander um diese Längsachse (A) zu versetzen, **dadurch gekennzeichnet, dass** diese Vorrichtung zur magnetischen Kompensation (9) innerhalb des Wärmeerzeugungsspalts (E₁, E₂) angeordnet ist, dass das erste Magnetteil mit den erwähnten mindestens zwei Permanentmagneten (21) dieser Magnetanordnung (2) zusammenfällt und dass das erwähnte zweite Teil ferromagnetische Elemente (90) enthält, die auf diesem Halter (3), in den passiven Zonen (ZP) ohne magnetokalorische Elemente (4) hinzugefügt werden, um die erwähnte oszillierende magnetische Kompensationskraft (Cc) zu erzeugen.

15. Gerät nach Anspruch 14, **dadurch gekennzeichnet, dass** diese Magnetanordnung (2) auf einem festen Teil (12) dieses Geräts (1) montiert ist und dieser Halter (3) drehbar mit dieser Antriebsvorrichtung (10) verbunden ist.

16. Gerät nach Anspruch 14, **dadurch gekennzeichnet, dass** die erwähnte Magnetanordnung (2) drehbar mit dieser Antriebsvorrichtung (10) verbunden ist und der erwähnte Halter (3) auf einem festen Teil (12) dieses Gerätes (1) montiert ist.

## Claims

1. Magnetocaloric thermal apparatus (1) comprising a magnetic arrangement (2) defining at least one air gap referred to as a "thermal generation air gap (E₁, E₂)" in which a magnetic field circulates, at least one support (3) in the median plane (P) of the said at least one thermal generation air gap (E₁, E₂) and supporting magnetocaloric elements (4) set out in active areas (ZA) separated by passive areas (ZP) devoid of magnetocaloric elements (4), the active areas (ZA) having a higher magnetic permeability than the passive areas (ZP), a driving device (10) arranged to move the said magnetic arrangement (2) or the said at least one support (3) relative to each other to move said magnetocaloric elements (4) in and out of said at least one thermal generation air gap (E₁, E₂) so as to put them through successive magnetic cycles, said magnetic cycles generating within said driving device (10) an oscillating driving force (Ce) due to an alternation of different magnetic permeabilities between the active areas (ZA) and the passive areas (ZP) of said support (3), with this apparatus also having a magnetic compensation device arranged to create an oscillating magnetic compensation force (Cc) phase-shifted with respect to the oscillating driving force (Ce) of said driving device (10) to generate a resultant oscillating force (Cr) with amplitude of less than the amplitude of the oscillating driving force (Ce), **characterized in that** said magnetic compensation device is a specific magnetic compensation device (5-9), at least partly added to said apparatus, and arranged to create an oscillating magnetic compensation force (Cc) in phase opposition to the oscillating driving force (Ce) of said driving device (10) to create a tendency toward a constant resultant force (Cr), and **in that** it comprises a first magnetic part and a second magnetic or ferromagnetic part, defining an air gap between each other called the compensation air gap (Ec), in which a magnetic field circulates, while one of the two parts is mechanically coupled to said driving device (10) to be driven synchronously with said magnetic arrangement (2) or said support (3) relatively to the other part, at least one of the two parts having areas of high magnetic permeability alternating with areas of low magnetic permeability to create in said compensation air gap (Ec) said oscillating magnetic compensation (Cc) force.

2. Apparatus according to claim 1, having a structure designed to rotate about a longitudinal axis (A), wherein said at least one support (3) has a circular shape centered on said longitudinal axis (A), said magnetocaloric elements (4) being set out on said at least one support (3) in said active areas (ZA) separated from each other at a constant angular pitch (P₄), and the said driving device (10) being arranged to move the said magnetic arrangement (2) or the said at least one support (3) in relative rotation to each other about the said longitudinal axis (A), the said magnetic compensating device (5-8) being located outside the thermal generation air gap (E₁, E₂), and in that said first magnetic part comprises at least one magnet (51, 61, 71, 81) set out radially at a distance from said longitudinal axis (A), and of said second magnetic or ferromagnetic part comprising a ring gear (52, 62, 72, 82), centered on the longitudinal axis (A), and presenting with respect to the said at least one magnet (51, 61, 71, 81) alternating high and low magnetic permeability areas in the said compensation air gap (Ec).

3. Apparatus according to claim 2, **characterized in that** the said at least one magnet (51, 61, 71, 81) is mounted on a fixed part (12) of the said apparatus (1) and said ring gear (52, 62, 72, 82) is coupled to rotate with the said driving device (10).

4. Apparatus according to claim 2, **characterized in that** the said at least one magnet is coupled to rotate with the said driving device (10) and the said ring gear is mounted on a fixed part (12) of the said apparatus (1).

5. Apparatus according to any one of claims 2 to 4, **characterized in that** the said at least one magnet (51, 71) and the said ring gear (52, 72) are radially aligned, and **in that** the said compensation air gap (Ec) extends radially.

6. Apparatus according to any one of claims 2 to 4, **characterized in that** the said at least one magnet (61, 81) and the said ring gear (62, 82) are axially aligned, and **in that** the said compensation air gap (Ec) extends axially.

7. Apparatus according to claim 2, **characterized in that** the said ring gear (52, 62, 72, 82) is crenellated and comprises alternating teeth (54, 64, 74, 84) and gaps (53, 63, 73, 83), said teeth (54, 64, 74, 84) being separated at an angular pitch substantially equal to the angular pitch (P₄) separating the active areas (ZA) of the said support (3).

8. Apparatus according to claim 7, **characterized in that** the said ring gear (52, 62, 72, 82) is made of ferromagnetic material.

9. Apparatus according to claim 7, **characterized in that** the said ring gear (72, 82) comprises a ring gear support (75, 85) of amagnetic material and ferromagnetic elements (74, 84) arranged in a ring gear on the said ring gear support (75, 85), forming teeth separated at an angular pitch substantially equal to the angular pitch (P₄) separating the active areas (ZA) of the said support (3).

10. Apparatus according to claim 7, **characterized in that** the said ring gear (52) comprises magnets (54a) forming teeth (54) alternating with gaps (53), the said magnets (54a) being mounted on a ring gear support (55) of amagnetic material, and oriented so that the magnet faces (51, 54a) opposite one another in the said compensation air gap (Ec) are of opposite polarities.

11. Apparatus according to claim 2, **characterized in that** the said ring gear (52) comprises a succession of magnets (53a, 54a) having opposite polarity and set out in alternation so that the faces of the magnets (51, 53a, 54a) opposite each other in the said compensation air gap (Ec) are alternately of the opposite and of the same polarity.

12. Apparatus according to any one of claims 2 to 11, **characterized in that** the magnetic compensation device (5-8) further comprises means for adjusting the gap of said compensation air gap (Ec) to adjust the oscillating magnetic compensation force to the oscillating driving force of said driving device (10).

13. Apparatus according to claim 12, **characterized in that** the said at least one magnet (51, 71) is mounted on a carriage, and **in that** the said adjusting means comprises an actuator coupled to the said carriage and controlled by a force sensor associated with the said driving device (10).

14. Apparatus according to claim 1, having a rotating structure about a longitudinal axis (A), wherein the said at least one support (3) is of a substantially circular shape, centered on said longitudinal axis (A), said magnetocaloric elements (4) being set out on said at least one support (3) in active areas (ZA) separated from each other at a constant angular pitch (P₄), the said magnetic arrangement (2) comprising at least two permanent magnets (21) of opposite polarities establishing between one another the said thermal generation air gap (E₁, E₂), and the said driving device (10) being arranged to move the said magnetic arrangement (2) or the said at least one support (3) in rotation relatively to each other about the said longitudinal axis (A), **characterized in that** the said magnetic compensation device (9) is arranged inside the thermal generation air gap (E₁, E₂), and **in that** the said first magnetic part is joined to the said at least two permanent magnets (21) of the said magnetic arrangement (2), and **in that** the said second part comprises ferromagnetic elements (90) added on the said support (3), in the passive areas (ZP) devoid of magnetocaloric elements (4), to create of the said oscillating magnetic compensation force (Cc).

15. Apparatus according to claim 14, **characterized in that** the said magnetic arrangement (2) is mounted on a fixed part (12) of the said apparatus (1) and the said support (3) is coupled to rotate with the said driving device (10).

16. Apparatus according to claim 14, **characterized in that** the said magnetic arrangement (2) is coupled to rotate with the said driving device (10) and the said support (3) is mounted on a fixed part (12) of the said apparatus (1).
